# DEMANDE DE BREVET EUROPEEN

(11) **EP 1 647 417 A1**
(43) Date de publication de la demande: **19.04.2006**
(21) Numéro de dépôt: 05109492.8
(22) Date de dépôt: 12.10.2005
(51) Int. Cl.: B60B 21/00

(54) **Roue et procédé de moulage de roue à valve deportée et masquée**

(30) Priorité: 12.10.2004 FR 0410733
(71) Demandeur: MONTUPET S.A., F-92110 Clichy (FR)
(72) Inventeur: Pielin, Jean Pierre, 60410 Saint Vraast de Longmont (FR); Meyer, Philippe, 60600 Ronquerolles (FR)
(74) Mandataire: Le Forestier, Eric

(57) **Abrégé**

L'invention concerne une roue en alliage léger, notamment en alliage d'aluminium, pour véhicule automobile, comportant un conduit (45) intégré dans le volume de la roue et débouchant d'une part au niveau de la jante dans une zone de gonflage (40) de pneumatique, et d'autre part au niveau de la partie centrale (42) de la roue, de telle sorte que ledit conduit (45) puisse assurer une connexion entre la chambre de gonflage du pneumatique et un moyen (44) de gonflage/dégonflage depuis l'extérieur du véhicule disposé au niveau de ladite partie centrale de la roue en y étant masqué par un élément (43) de la roue, caractérisée en ce que le conduit intégré (45) est formé par le recouvrement d'un évidement pratiqué dans l'un des bras de la roue.

L'invention concerne également le procédé d'obtention d'une telle roue.

## Description

L'invention a trait d'une manière générale aux roues en alliage léger, notamment en alliage d'aluminium, pour véhicules automobiles.

L'invention concerne plus précisément un procédé de réalisation d'une roue permettant notamment de déporter le moyen de gonflage/dégonflage du pneumatique vers la partie centrale de la roue et de mieux intégrer ce moyen de gonflage/dégonflage au style et au dessin de la roue. L'invention concerne également une nouvelle roue présentant ces propriétés améliorées.

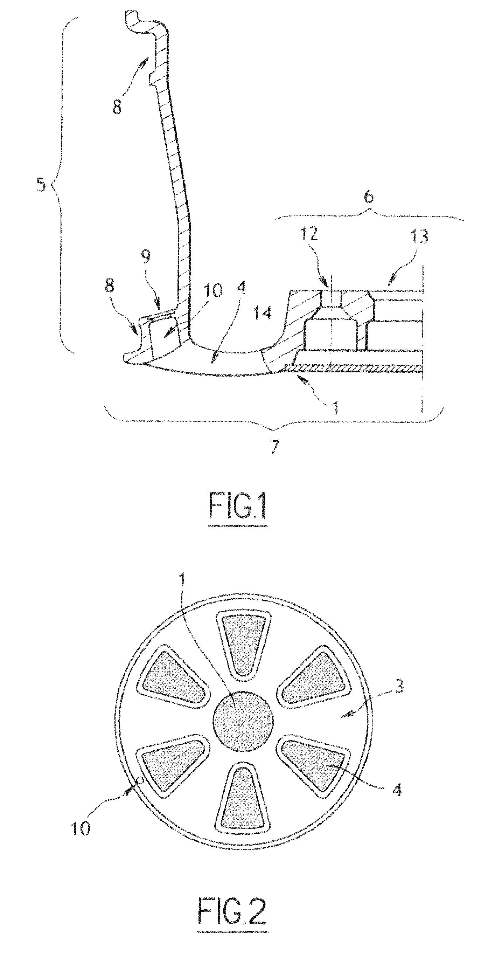

La plupart des roues en alliage léger sont de nos jours réalisées monobloc par moulage, généralement selon un procédé de fonderie basse pression. Les figures 1 et 2 représentent des vues schématiques, respectivement en coupe et de face, d'une telle roue classique

Comme cela est illustré sur la vue en coupe partielle de la figure 1, une roue comporte classiquement trois parties, à savoir une face avant 7, une jante 5, et un moyeu 6.

Comme cela est illustre sur la vue de face de la figure 2, la face avant de la roue comporte des bras 3 ainsi que des fenêtres 4, qui en particulier donnent à la roue son style spécifique.

La roue présente, au niveau du moyeu 6, un alésage central 13 ainsi que des trous de fixation 12 permettant de monter et de fixer la roue sur le véhicule.

L'alésage central 13 est masqué en face avant par la mise en place d'un cabochon central rapporté 1 qui s'inscrit dans le style de la roue. Ce cabochon 1 peut également être adapté pour masquer les trous de fixations 12 de la roue sur le véhicule.

La partie jante 5 est reliée à la partie centrale de la roue par l'intermédiaire des bras 3 en face avant 7. La partie jante 5 présente deux zones d'appui 8 du pneumatique.

Afin de pouvoir gonfler et dégonfler le pneumatique, la roue présente généralement une liaison entre l'intérieur du couple jante/pneumatique et la face avant de la roue.

Un logement 9 est ainsi aménagé côté interne pneumatique pour recevoir une valve de gonflage/dégonflage. Côté face avant, un dégagement 10 est réalisé pour constituer une zone de mise en place de la valve, de manière à permettre l'accès à la valve, et donc autoriser le gonflage/dégonflage du pneumatique depuis l'extérieur du véhicule.

La position de la valve s'intègre toutefois mal au style et au dessin de roue. Le dégagement 10 est effectivement apparent en face avant, comme cela est représenté sur la figure 2.

Par ailleurs la réalisation de la zone pour la mise en place de la valve pose certains problèmes dans le procédé de fabrication des roues en alliage d'aluminium, lequel est brièvement rappelé ci-après.

Ces roues sont généralement moulées selon le procédé de fonderie par basse pression. Le moule comprend essentiellement une semelle inférieure destinée à former la face avant de la roue et munie en son centre d'une ouverture appelée buse permettant l'arrivée du métal, de chapes (en général deux à quatre) destinées à réaliser la jante et d'un noyau supérieur destiné à réaliser les parties intérieure et arrière de la roue.

Le procédé de fabrication comprend la mise en place (en manuel ou en automatique) d'un filtre dans la buse, la fermeture du moule, l'injection du métal liquide dans le moule, la solidification du métal dans le moule, l'ouverture du moule et l'éjection de la roue ainsi moulée.

La roue peut, dans certains cas être traitée thermiquement.

Elle est ensuite usinée pour atteindre ses dimensions fïnales. Elle peut également être peinte en fonction des spécifications.

Un cabochon est typiquement positionné au centre de la face avant de la roue, une fois l'opération de peinture réalisée, Ce cabochon présente un effet de style, par exemple, du fait que la marque du fabricant de la roue ou du constructeur automobile peut y être représentée. Le cabochon peut également masquer certains éléments techniques tels que l'alésage central et les vis de fixations de la roue sur le véhicule.

Dans le cadre d'un tel procédé, la réalisation de la zone pour mise en place de la valve pose certains problèmes.

Dans le procédé de fonderie, il est nécessaire d'apporter un excédent de matière localement, au niveau de la zone de mise en place de la valve, Or cet apport de matière peut entraîner la formation de défauts métallurgiques. Et ces défauts sont finalement susceptibles d'occasionner des fuites et un dégonflage intempestif du pneumatique.

Par ailleurs, la réalisation du trou pour la mise en place de la valve nécessite un usinage comportant une première opération du côté de la face visible extérieure de la roue et une seconde opération du côté du pneumatique. Or ces opérations s'avèrent particulièrement critiques, et donc en particulier complexes, notamment en terme de qualité dimensionnelle.

L'invention vise à proposer un procédé de fabrication d'une roue en alliage léger qui pallie les problèmes susmentionnés, et qui permette d'obtenir une roue présentant des propriétés améliorées, notamment pour ce qui a trait au gonflage/dégonflage du pneumatique, et à l'aspect visuel de la face avant de la roue. L'invention vise plus précisément un procédé simple et peu coûteux, et notamment un procédé ne nécessitant pas de modifications du processus standard de moulage d'une roue.

A cet effet, l'invention propose selon un premier aspect une roue en alliage léger, notamment en alliage d'aluminium, pour véhicule automobile, comportant un conduit intégré dans le volume de la roue et débouchant d'une part au niveau de la jante dans une zone de gonflage de pneumatique, et d'autre part au niveau de la partie centrale de la roue, de telle sorte que ledit conduit puisse assurer une connexion entre la chambre de gonflage du pneumatique et un moyen de gonflage/dégonflage depuis l'extérieur du véhicule disposé au niveau de ladite partie centrale de la roue en y étant masqué par un élément de la roue, caractérisée en ce que le conduit intégré est formé par le recouvrement d'un évidement pratiqué dans l'un des bras de la roue.

Des aspects préférés mais non limitatifs de cette roue sont les suivants :
le conduit intégré traverse un bras de la roue ;
- le conduit intégré est positionné dans l'axe neutre du bras de la roue qu'il traverse :
l'évidement est pratiqué en face arrière de la roue ;
- un élément de tôle est soudé à la face arrière de la roue pour recouvrir l'évidement et former ainsi le conduit intégré ;
- le conduit débouche, du côté de la partie centrale de la roue, en face avant de la roue, et le moyen de gonflage/dégonflage est masqué par un cabochon rapporté sur la face avant de la roue :
le conduit débouche, du côté de la partie centrale de la roue, en face arrière de la roue, et en ce que le moyen de gonflage/dégonflage est
masqué par un bras de la roue.

Selon un deuxième aspect, l'invention propose un procédé de fabrication d'une roue en alliage léger, notamment un alliage d'aluminium, pour véhicule automobile, la roue comprenant un conduit intégré débouchant d'une part au niveau de la jante dans une zone de gonflage de pneumatique, et d'autre part au niveau de la partie centrale de la roue, de telle sorte que ledit conduit puisse assurer une connexion entre la chambre de gonflage du pneumatique et un moyen de gonflage/dégonflage depuis l'extérieur du véhicule disposé au niveau de ladite partie centrale de la roue en y étant masqué par un élément de la roue, le procédé étant caractérisé en ce que la roue est moulée dans un moule adapté pour qu'un évidement soit pratiqué en face arrière de l'un des bras de la roue et en ce que, après éjection de la roue moulée du moule, on soude un élément de tôle pour recouvrir ledit évidement et former le conduit intégré.

Des aspects préférés mais non limitatifs de ce procédé sont les suivants:
- il comporte en outre une étape de perçage au niveau de la jante visant à assurer la connexion du conduit intégré avec la zone de gonflage de pneumatique ;
- il comporte une opération d'usinage d'une zone de la roue pour la mise en place du moyen de gonflage/dégonflage;
- l'opération d'usinage est adaptée pour réaliser en outre la connexion du conduit avec la zone usinée de mise en place du moyen de gonflage/dégonflage ;
- le moule est également adapté pour assurer la connexion du conduit avec une zone de mise en place du moyen de gonflage/dégonflage ;
- la soudure est une soudure par faisceau d'électrons.

D'autres aspects, buts et avantages de l'invention apparaîtront mieux à la lecture de la description détaillée suivante de formes de réalisation préférées de celle-ci, donnée à titre d'exemple non limitatif et faite en référence aux dessins annexés.

Sur les dessins, outre les figures 1 et 2 déjà présentées plus haut :
la figure 3 représente une vue en coupe partielle d'un mode de réalisation possible d'une roue comprenant un conduit intégré débouchant d'une part au niveau de la jante dans une zone de gonflage et d'autre part au niveau de la partie centrale de la roue ;
la figure 4 représente une vue en coupe partielle d'un autre mode de réalisation partielle d'une roue comprenant un tel conduit intégré ;
les figures 5 et 6 représentent une roue selon un mode de réalisation préférentiel de l'invention selon lequel le conduit intégré est réalisé par soudage.

L'invention vise à proposer une roue en alliage léger, notamment en alliage d'aluminium, pour véhicule automobile, comportant un conduit pour le gonflage/dégonflage de pneumatique intégré dans le volume de la roue de manière adaptée pour qu'un moyen de gonflage/dégonflage depuis l'extérieur du véhicule puisse être disposé au niveau de la partie centrale de la roue en y étant masqué par un élément de la roue.

Le conduit intégré débouche d'une part au niveau de la jante dans une zone de gonflage de pneumatique, et d'autre part au niveau de la partie centrale de la roue, et permet d'assurer ainsi une connexion entre la chambre de gonflage du pneumatique et un moyen de gonflage/dégonflage (typiquement une valve), depuis l'extérieur du véhicule, du pneumatique disposé au niveau de ladite partie centrale de la roue.

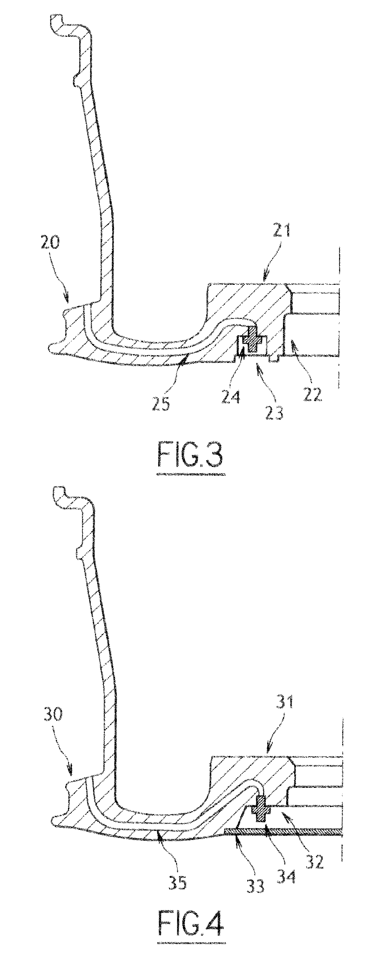

Les figures 3 et 4 présentent des modes de réalisation possibles de roues dans le volume desquelles est intégré un conduit 25, 35 permettant de relier une zone 20, 30 de gonflage de pneumatique agencé au niveau de la jante à la partie centrale 22, 32 de la roue.

Une valve 24, 34 est raccordée au conduit à l'orifice de celui-ci qui est agencé au niveau de la partie centrale 22, 32 de la roue, du côté de la face avant.

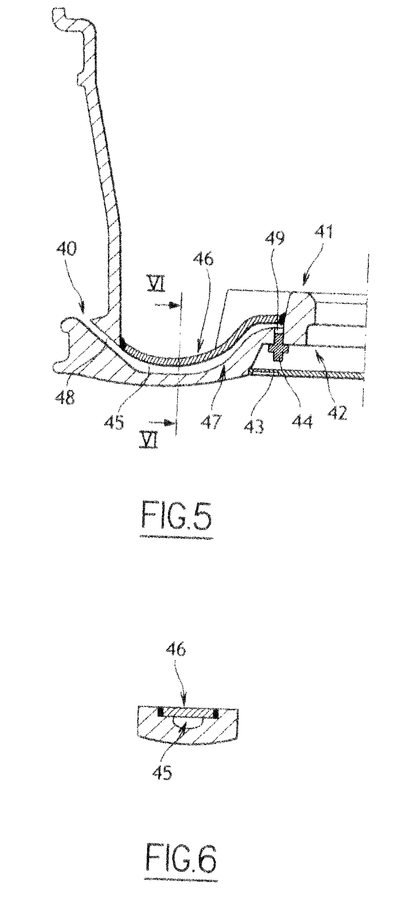

Les figures 5 et 6 représentent une roue selon un mode de réalisation préféré de l'invention. La figure 5 est une vue en coupe partielle, et la figure 6 une vue en coupe selon le plan de coupe VI-VI indiqué sur la figure 5. Sur ces figures 5 et 6, un conduit 45 est intégré au volume de la roue et permet de relier une zone 40 de gonflage de pneumatique agencé au niveau de la jante à la partie centrale 42 de la roue. Une valve 44 est raccordée au conduit 45 à l'orifice de celui-ci qui est agencé au niveau de la partie centrale 42 de la roue, du côté de la face avant.

La valve 24, 34, 44 peut alors être masquée par un cabochon 23, 33, 43 rapporté sur la face avant de la roue. La valve 24, 34, 44 n'est alors pas apparente depuis l'extérieur de la roue, et ne perturbe donc pas le dessin et le style de celle-ci.

Les roues des figures 3 à 6 différent ainsi des roues classiques en ce qu'elles sont obtenues en déportant la valve 24, 34, 44 vers le centre de la roue et en reliant la zone de gonflage 20, 30, 40 du pneumatique à cette valve par un conduit 25, 35, 45 intégré au volume de la roue.

Le conduit 25, 35 des roues des figures 3 et 4 est plus précisément noyé dans la masse d'alliage d'aluminium du bras de la roue, et seuls ses orifices sont donc susceptibles d'être apparents sur la roue.

Le conduit 45 de la roue des figures 5 et 6 est quant à lui formé, comme cela sera discuté plus en avant par la suite, par le soudage d'un élément 46 venant recouvrir un évidement pratiqué en face arrière de la roue.

La figure 3 présente un mode de réalisation possible d'une roue comportant une valve 24 vissée masquée derrière un cabochon 23 spécifique rapporté sur la face avant de la roue. Ce mode de réalisation est particulièrement avantageux lorsque le cabochon central ne masque pas les trous de fixation.

La figure 4 présente un autre mode de réalisation d'une roue comportant une valve 29 vissée masquée derrière un cabochon 25 central rapporté sur la face avant de la roue, ici assez grand pour masquer les trous de fixation et donc aussi la valve déportée.

Dans les solutions représentées par les figures 3 à 6, la valve déportée dans la zone centrale de la roue, en face avant de celle-ci, est masquée, et donc non apparente depuis l'extérieur (lorsque l'on regarde la face avant de la roue, comme c'est le cas sur la représentation d'un roue classique de la figure 2), par un cabochon rapportée sur la face avant de la roue. Il suffit d'ôter le cabochon de la face avant de la roue pour pouvoir accéder à la valve, et réaliser alors le gonflage/dégonflage du pneumatique Le cabochon peut ensuite être rapporté en face avant et permettre ainsi de masquer à nouveau la valve,

On mentionne ici que dans le cadre de l'invention, le conduit ne débouche pas nécessairement, au niveau de la partie centrale de la roue, en face avant de cette dernière. Le conduit peut effectivement également déboucher au niveau de la partie centrale de la roue dans une zone de celle-ci susceptible d'être masquée par un bras de la roue.

A titre d'exemple, le conduit peut ainsi déboucher en face arrière de la roue, au niveau du moyeu (cf. références 21 et 31 sur les figures 3 et 4 ; non illustré sur la figure 5), de sorte que la valve est masquée par un bras de la roue, tout en étant accessible depuis l'extérieur à travers une fenêtre de la roue.

Par ailleurs, on aura compris que l'invention n'est aucunement limitée à l'utilisation d'une valve mais s'étend à tout moyen apte à permettre le gonflage/dégonflage du pneu depuis l'extérieur du véhicule par connexion à l'orifice du conduit débouchant au niveau de la partie centrale de la roue.

L'aspect visuel des roues selon l'invention peut ainsi être qualifié de «Full Style» le moyen de gonflage du pneumatique, masqué par un élément de la roue, n'est effectivement pas apparent et est donc sans impact sur le style de la roue.

La description ci-après détaille différents modes de réalisation d'un procédé de fabrication d'une roue comportant un conduit intégré dans le volume de la roue de telle sorte qu'un moyen de gonflage/dégonflage, depuis l'extérieur du véhicule, du pneumatique connecté audit conduit puisse être disposé au niveau de la partie centrale de la roue en y étant masqué par un élément de celle-ci.

Selon un premier mode de réalisation possible, le conduit est réalisé par usinage. Le conduit réalisant le déport de la valve vers la partie centrale de la roue peut être réalisé par un perçage profond adapté pour relier la zone de gonflage du pneumatique, au niveau de la jante, à la partie centrale de la roue, en traversant un bras de la roue.

Bien entendu, la forme du bras de la roue doit être telle qu'il est possible de percer un tel trou long depuis la zone pneumatique jusqu'au moyeu de la roue. Il est à noter que cette contrainte peut s'avérer limitante pour certains styles de roue aujourd'hui proposés.

Selon un deuxième mode de réalisation possible, le conduit est réalisé par noyautage.

Le matériau du noyau peut être du sable ou tout autre matériau compatible avec le moulage de l'aluminium et de ses alliages, et lié avec de la résine dégradable thermiquement, mécaniquement ou encore par processus physico-chimique.

Le noyau peut ainsi être constitué par un sable siliceux à liant organique (par exemple par mise en oeuvre d'un procédé de type boite froide, boite chaude, ou croning) ou encore par d'autres types de sables à liants inorganiques.

Le noyau est adapté pour supporter la température de l'alliage liquide sans subir de déformation ou de déplacement durant le moulage de la roue.

Le cheminement du noyau dans la roue est déterminé en fonction du dessin de la roue, mais aussi pour respecter les différentes spécifications, tant en terme de qualité métallurgique, que de tenue en fatigue et encore de non fuite d'air amenant au dégonflage du pneumatique,

Afin de pouvoir faire face aux sollicitations en service de la roue, le cheminement du noyau peut être optimisé pour rester au maximum dans l'axe neutre d'un bras de la roue.

Le procédé de fabrication de roues avec insertion d'un noyau selon ce mode de réalisation possible comporte les étapes consistant à mettre en place (manuellement ou automatiquement) le filtre dans la buse, à positionner (manuellement ou automatiquement) le noyau, à fermer le moule, à injecter du métal liquide dans le moule et autour du noyau, à solidifier le métal dans le moule, à ouvrir le moule et à éjecter la roue ainsi moulée avec le noyau.

Afin de positionner le noyau, on relie par exemple une de ses extrémités à la chape du moule et l'autre extrémité dans un logement prévu à cet effet sur la semelle du moule, au voisinage immédiat de la buse.

L'élimination du noyau se fait après moulage par opération mécanique (par martelage, vibration, etc.) ou par opération thermique, (par exemple durant le cycle de traitement thermique), ou encore par réaction physico-chimique dans le cas de noyaux à liants hydrauliques (par exemple liants inorganiques solubles dans l'eau).

Les opérations d'usinage et de peinture sont réalisées après suppression du noyau.

Selon un troisième mode de réalisation possible, le conduit est réalisé par insertion d'un tube dans le volume de la roue.

On mentionne ici que l'on pourra trouver dans le brevet européen EP0470021B1 délivré à la présente Demanderesse une description d'une technique d'insertion de tube dans des pièces moulées en aluminium.

Le matériau d'un tube est choisi dans un matériau adapté pour supporter la température de l'alliage liquide et ainsi ne pas subir de déformation ou de déplacement durant le moulage de la roue.

Le tube est tout d'abord soumis à une étape, préalable à la coulée, de mise en forme pour l'adapter à la forme spécifique de la roue. Des opérations peuvent également être réalisées afin d'assurer l'intégrité du tube lors des phases de fonderie, d'usinage et de peinture de la roue.

En particulier, l'extrémité du tube côté alimentation de la roue, dans la zone de la buse centrale, doit être obturée de manière à éviter l'intrusion de l'aluminium liquide dans le tube lors de son remplissage. Cette obturation est éliminée par les opérations ultérieures d'usinage.

Le cheminement du tube dans la roue est déterminé en fonction du dessin de la roue mais aussi pour respecter les différentes spécifications, tant en terme de qualité métallurgique, que de tenue en fatigue ou encore de non fuite d'air susceptible d'entraîner le dégonflage du pneumatique.

Afin de pouvoir faire face aux sollicitations en service de la roue, le cheminement du tube peut être optimisé pour rester au maximum dans l'axe neutre d'un bras de la roue.

Il est par ailleurs particulièrement avantageux que le cheminement du tube soit sans contact avec le milieu extérieur (sauf bien entendu à ses extrémités qui définissent les orifices du conduit), de manière à limiter le risque de fuite le long du tube et/ou de corrosion du tube.

Le procédé de fabrication de roues avec insertion de tube comporte les étapes consistant à mettre en place (manuellement ou automatiquement) le filtre dans la buse, à positionner (manuellement ou automatiquement) le tube préalablement préparé, à fermer le moule, à injecter du métal liquide dans le moule et autour du tube, à solidifier le métal dans le moule, à ouvrir le moule et à éjecter la roue ainsi moulée avec le tube intégré dans son volume.

Afin de positionner le tube, on relie par exemple une de ses extrémités à la chape du moule et l'autre extrémité dans un logement prévu à cet effet sur la semelle du moule, au voisinage immédiat de la buse.

Les opérations d'usinage et de peinture qui sont réalisées sur la roue, après éjection de celle-ci du moule, sont adaptées pour prendre en compte les contraintes liées à la présence du tube métallique dans cette roue.

En particulier, le matériau du tube est choisi de telle sorte qu'il soit possible de l'usiner dans des conditions proches des conditions d'usinage du matériau de la roue (par exemple l'aluminium).

Le tube est par ailleurs choisi dans un matériau présentant des caractéristiques de non corrosion, de manière à permettre le respect des spécifications existantes en ce qui concerne les roues en alliage d'aluminium.

On peut ainsi choisir des tubes en aluminium quasi pur, ou encore en aluminium du type des séries 5000 ou 3000 selon les appellations de l'American Aluminium Association (AAA).

On mentionne ici, qu'il peut être utile, pour éviter la fusion du tube dans l'environnement proche de la buse lors de la phase de remplissage du Moule, d'utiliser un tube mixte formé en acier côté buse et en aluminium vers l'extrémité extérieure du bras (côté jante). Ce tube mixte peut par exemple être formé par l'assemblage à force de deux tubes, l'un en acier, l'autre en aluminium.

Il est également possible d'utiliser non pas un tube creux, mais un conduit poreux réalisé dans un matériau présentant une porosité suffisante pour garantir le passage du gaz de gonflage/dégonflage. Un tel conduit poreux peut par exemple être réalisé en un matériau granulaire fritté et peut être enduit, préalablement à la coulée, d'une couche permettant d'éviter l'intrusion de l'alliage liquide lors du moulage.

Selon un mode de réalisation préférentiel de l'invention, et en référence aux figures 5 et 6, le conduit 45 est formé par le soudage d'un élément de tôle 46 venant recouvrir un évidement 45 pratiqué (par exemple suite au moulage de la roue dans un moule adapté à cet effet) en face arrière d'un bras 47 de la roue.

L'élément de tôle 46 est choisi dans un matériau compatible du point de vue de la soudure et de la tenue en service avec l'alliage de moulage de la roue, notamment en ce qui concerne la tenue en corrosion avec l'alliage de moulage, Il s'agit par exemple d'une tôle en aluminium, par exemple un aluminium des séries 6000 et 5000 selon les appellations de l'AAA.

Un ou plusieurs perçages en extrémité peuvent assurer sa connexion avec l'ensemble jante/pneumatique (cf. perçage 48 sur la figure 5) ou avec le trou de fixation de la jante.

La connexion 49 du conduit 45 avec la zone usinée de mise en place de la valve 44 peut être réalisée brute de moulage, ou encore lors de l'opération d'usinage du trou de valve.

Ce mode de réalisation est avantageux en ce qu'il ne perturbe pas le procédé de moulage de la roue, en particulier lors de l'étape d'ouverture du moule, au contraire des procédés de moulage comportant des opérations de dépose de noyaux et/ou de tubes.

L'opération de soudure de l'élément de tôle 46 est en effet une opération séparée, hors moulage.

La fabrication d'une roue selon le mode de réalisation préféré selon l'invention (soudage) ne nécessite donc pas d'adaptation du processus standard de moulage et s'avère ainsi plus simple et moins coûteux que les autres modes de réalisation évoqués précédemment (noyautage, insertion de tube).

L'opération séparée de soudure peut être effectuée par des procédés classiques du type TIG, MIG, plasma, laser ou par faisceau d'électrons, On notera que ce dernier est particulièrement bien adapté en ce qu'il permet de minimiser et confiner les zones affectées par la soudure.

On aura bien compris que le procédé selon l'invention dont des exemples de mise en oeuvre viennent d'être décrits permet d'éviter les problèmes constatés avec les roues classiques relatifs à la sensibilité à la santé métallurgique du bossage du trou de valve ainsi qu'aux opérations d'usinage.

Bien entendu, la présente invention n'est nullement limitée aux formes de réalisation décrites et représentées, mais l'homme du métier saura y apporter de nombreuses variantes ou modifications, En particulier, l'invention n'est pas limitée à un procédé de fonderie basse pression, mais s'étend à tout procédé de moulage de roues avec un alliage léger, tel que par exemple le moulage par gravité, ou la réalisation de roues par des procédés hybrides tels que par exemple :
- moulage + fluorotournage à chaud,
- moulage + ajout d'éléments réalisés par corroyage et soudage/assemblage de ces éléments sur la partie moulée.

En outre, on peut prévoir que le conduit intégré dans le volume de la roue puisse être utilisé à d'autres fins que le gonflage/dégonflage de pneumatique, en particulier pour réaliser une mesure de pression du pneumatique.

## Revendications

1. Roue en alliage léger, notamment en alliage d'aluminium, pour véhicule automobile, comportant un conduit (45) intégré dans le volume de la roue et débouchant d'une part au niveau de la jante dans une zone de gonflage (40) de pneumatique, et d'autre part au niveau de la partie centrale (42) de la roue, de telle sorte que ledit conduit (45) puisse assurer une connexion entre la chambre de gonflage du pneumatique et un moyen (44) de gonflage/dégonflage depuis l'extérieur du véhicule disposé au niveau de ladite partie centrale de la roue en y étant masqué par un élément (43) de la roue, **caractérisée en ce que** conduit intégré (45) est formé par le recouvrement d'un évidement pratiqué dans l'un des bras de la roue.

2. Roue selon la revendication précédente, **caractérisée en ce que** le conduit intégré traverse un bras de la roue.

3. Roue selon la revendication précédente, **caractérisée en ce que** le conduit intégré est positionné dans l'axe neutre du bras de la roue qu'il traverse.

4. Roue selon l'une des revendications précédentes, **caractérisée**) en ce que l'évidement est pratiqué en face arrière de la roue.

5. Roue selon la revendication précédente, **caractérisée en ce qu'**un élément de tôle (46) est soudé à la face arrière de la roue pour recouvrir ledit évidement et former ainsi le conduit intégré (45).

6. Roue selon l'une des revendications précédentes, **caractérisée en ce que** le conduit (45) débouche, du côté de la partie centrale de la roue, en face avant de la roue, et **en ce que** le moyen de gonflage/dégonflage (44) est masqué par un cabochon (43) rapporté sur la face avant de la roue.

7. Roue selon l'une des revendications 1 à 5, **caractérisée en ce que** le conduit débouche, du côté de la partie centrale de la roue, en face arrière de la roue, et **en ce que** le moyen de gonflage/dégonflage est masqué par un bras de la roue.

8. Procédé de fabrication d'une roue en alliage léger, notamment un alliage d'aluminium, pour véhicule automobile, la roue comprenant un conduit intégré (45) débouchant d'une part au niveau de la jante dans une zone de gonflage (40) de pneumatique, et d'autre part au niveau de la partie centrale (42) de la roue, de telle sorte que ledit conduit (45) puisse assurer une connexion entre la chambre de gonflage du pneumatique et un moyen (44) de gonflage/dégonflage depuis l'extérieur du véhicule disposé au niveau de ladite partie centrale de la roue en y étant masqué par un élément (43) de la roue, le procédé étant **caractérisé en ce que** la roue est moulée dans un moule adapté pour qu'un évidement soit pratiqué en face arrière, de l'un des bras de la roue et **en ce que**, après éjection de la roue moulée du moule, on soude un élément de tôle (46) pour recouvrir ledit évidement et former le conduit intégré (45).

9. Procédé selon la revendication précédente, **caractérisé en ce qu'**il comporte en outre une étape de perçage au niveau de la jante visant à assurer la connexion du conduit intégré avec la zone de gonflage de pneumatique.

10. Procédé selon l'une des deux revendications précédentes, **caractérisé en ce qu'**il comporte une opération d'usinage d'une zone de la roue pour la mise en place du moyen de gonflage/dégonflage (44).

11. Procédé selon la revendication précédente, **caractérisé en ce que** ladite opération d'usinage est adaptée pour réaliser en outre la connexion (49) du conduit (45) avec la zone usinée de mise en place du moyen de gonflage/dégonflage (44).

12. Procédé selon l'une des revendications 8 à 10, **caractérisé en ce que** le moule est également adapté pour assurer la connexion (49) du conduit (45) avec une zone de mise en place du moyen de gonflage/dégonflage (44).

13. Procédé selon l'une des revendications 8 à 12, **caractérisé en ce que** la soudure est une soudure par faisceau d'électrons,
